# EUROPEAN PATENT APPLICATION

(11) **EP 4 383 860 A1**
(43) Date of publication of application: **12.06.2024**
(21) Application number: 22851717.3
(22) Date of filing: 10.06.2022
(51) Int. Cl.: H04W 64/00

(54) **TIMING ERROR RELATED INFORMATION TRANSMISSION METHOD AND APPARATUS**

(30) Priority: 06.08.2021 CN 202110904103
(71) Applicant: Datang Mobile Communications Equipment Co., Ltd., Beijing 100085 (CN)
(72) Inventor: REN, Xiaotao, Beijing 100085 (CN); REN, Bin, Beijing 100085 (CN); DA, Ren, Beijing 100085 (CN)
(74) Representative: Studio Torta S.p.A.
(86) International application number: PCT/CN2022/098157
(87) International publication number: WO 2023/011001

(57) **Abstract**

Embodiments of the present disclosure provide a timing error related information transmission method and apparatus. The method comprises: transmitting to a network device related information between a sounding reference signal for positioning (SRS-Pos) resource or an SRS-Pos resource set and transmission timing error information. According to the timing error related information transmission method provided by the embodiments of the present disclosure, related information between an SRS-Pos resource or an SRS-Pos resource set between transmission timing error information is reported to a network device by means of UE, such that when the position of a terminal is calculated, the network device can select a different transmission timing error according to the related information and a different SRS-Pos; a transmission timing error can be estimated more accurately or the influence of the transmission timing error can be removed; the influence of the transmission timing error on the calculation accuracy of the position of the terminal is avoided; and the positioning accuracy of the network device when estimating the position of the UE is improved.

## Description

### CROSS-REFERENCE TO RELATED APPLICATION

The present application claims priority to Chinese patent application No. 202110904103.0 filed on August 06, 2021, entitled "Timing Error Related Information Transmission Method and Apparatus", which is hereby incorporated by reference in its entirety.

### FIELD

The present application relates to the field of radio communication, and particular to methods and apparatuses for transmitting timing error association information.

### BACKGROUND

Among traditional positioning methods, uplink-time difference of arrival (UL-TDOA) positioning method is an important positioning method, and its working principle is as follows. A user equipment (UE) transmits a sounding reference signal for positioning (SRS-Pos), a transmit and receive point (TRP) near the UE receives and measures a time of arrival (TOA) of the SRS-Pos, the TRP reports an obtained uplink relative time of arrival (UL RTOA) of the SRS-Pos to a location management function (LMF), and the LMF uses the UL RTOA to obtain distances between the UE and various TRPs. Then, a position of the terminal device is calculated in combination with other known information (such as a geographical coordinate of the TRP).

As mentioned above, for the UL-TDOA positioning method, in relevant protocols, when a positioning time measurement value such as UL RTOA is calculated, the protocol assumes that time measurement is performed at an antenna connector position. However, the time measurement position of the signal is in a baseband unit, causing a time measurement error, where the time measurement error exists for both SRS-Pos signal transmission and signal reception, and is referred to as a transmission timing error and a reception timing error. The timing error may lead to inaccurate measurement results for all time-based positioning methods, including UL-TDOA, thereby affecting the final positioning accuracy. Moreover, these transmission timing error and reception timing error are associated with the hardware link and are time-variant, that is, measurement results corresponding to different radio frequency links or different time have different transmission/reception timing errors. When the UE transmits SRS-Pos resources through different radio frequency links or at different time, the SRS-Pos resources may have different transmission timing errors, resulting in low positioning accuracy by the LMF.

### SUMMARY

In response to the problems in the related art, embodiments of the present application provide methods and apparatuses for transmitting timing error association information.

An embodiment of the present application provides a method for transmitting timing error association information, applied to a terminal device, including:
transmitting association information between a sounding reference signal for positioning (SRS-Pos) resource or SRS-Pos resource set and transmission timing error information to a network side device.

In an embodiment, transmitting the association information between the SRS-Pos resource or SRS-Pos resource set and the transmission timing error information to the network side device includes:
transmitting the association information to a location management function (LMF); or
transmitting the association information to a base station; or
transmitting the association information to an LMF via a base station;
where the network side device includes the LMF or the base station.

In an embodiment, the association information is determined by any of the following ways:
determining association information between an SRS-Pos resource identifier (ID) or SRS-Pos resource set ID and a transmission timing error information ID based on the SRS-Pos resource ID or SRS-Pos resource set ID; or
determining association information between a transmission timing error information ID and an SRS-Pos resource ID or SRS-Pos resource set ID based on the transmission timing error information ID; or
determining the association information based on whether the SRS-Pos resources in the SRS-Pos resource set belong to a same transmission timing error information identifier (ID); or
determining the association information based on whether the SRS-Pos resource sets belong to a same transmission timing error information identifier (ID).

In an embodiment, the method further includes:
transmitting multiple SRSs-Pos using a same radio frequency link during one positioning measurement.

In an embodiment, the method further includes:
reporting a mapping relationship between a transmission timing error information ID and a range of transmission timing error to the network side device.

In an embodiment, reporting the mapping relationship between the transmission timing error information ID and the range of transmission timing error to the network side device includes:
the network side configures the mapping relationship, the terminal device selects the mapping relationship to be used and reports the mapping relationship to the network side device; or
the terminal device configures the mapping relationship and reports the mapping relationship to the network side device.

In an embodiment, the method further includes:
reporting timestamp information corresponding to the association information for indicating a validity period of the association information to the network side device.

In an embodiment, the method further includes:
in case that the association information is determined to be invalid based on the timestamp information, transmitting updated association information to the network side device.

In an embodiment, the method further includes:
reporting configuration information of a sounding reference signal for multiple input multiple output (MIMO) (SRS-MIMO) and/or association information between SRS-MIMO and the transmission timing error information to the network side device.

In an embodiment, the method further includes:
after receiving a capability request transmitted from the network side device, transmitting a response message to the network side device to indicate whether the terminal device is able to provide the association information.

In an embodiment, the method further includes:
in case that the terminal device is able to provide the association information, carrying the association information in the response message.

In an embodiment, the method further includes:
after receiving an association information request message transmitted from the network side device, determining a reporting content and/or a reporting path of the association information based on an indication of the association information request message,
where the reporting path includes directly or indirectly reporting the association information; and
the reporting content includes a granularity, an additional content, and a format of the association information.

In an embodiment, transmitting the association information to the network side device includes:
transmitting *ProvideLocationlnformation* to the network side device and carrying the association information in a *ProvideLocationlnformation* information element (IE).

In an embodiment, in case that the association information is configured to the SRS-Pos resource set, it indicates that all SRS-Pos resources in the resource set have same transmission timing error information; and
in case that the association information is configured to the SRS-Pos resource, it indicates that different SRSs-Pos resources in the resource set have different transmission timing error information.

In an embodiment, the transmission timing error information includes one or more of transmission timing error group information, transmission timing error value information, transmission phase center deviation information, and transmission phase center deviation group information.

An embodiment of the present application provides a method for transmitting timing error association information applied to a network side device, including:
receiving association information between a sounding reference signal for positioning (SRS-Pos) resource or SRS-Pos resource set and transmission timing error information transmitted from a terminal device; and
positioning the terminal device based on the association information.

In an embodiment, the method further includes:
receiving a mapping relationship between a transmission timing error information ID and a range of transmission timing error transmitted from the terminal device.

In an embodiment, the method further includes:
determining a mapping relationship used by the terminal device in pre-configured mapping relationships and transmitting the mapping relationship used by the terminal device to the terminal device.

In an embodiment, the method further includes:
receiving timestamp information corresponding to the association information for indicating a validity period of the association information transmitted from the terminal device.

In an embodiment, the method further includes:
in case that the association information is determined to be invalid based on the timestamp information, receiving updated association information transmitted from the terminal device.

In an embodiment, the method further includes:
receiving configuration information of a sounding reference signal for MIMO (SRS-MIMO) and/or association information between SRS-MIMO and the transmission timing error information reported from the terminal device.

In an embodiment, the method further includes:
after transmitting a capability request to the terminal device, receiving a response message transmitted from the terminal device, where the capability request is used to query whether the terminal device is able to provide the association information.

In an embodiment, the method further includes:
transmitting an association information request message to the terminal device, where the association information request message is used to indicate the terminal device to determine a reporting content and/or a reporting path of the association information;
where the reporting path includes directly or indirectly reporting the association information; and
the reporting content includes a granularity, an additional content, and a format of the association information.

In an embodiment, receiving the association information transmitted from the terminal device includes:
receiving *ProvideLocationInfonnation* transmitted from the terminal device, where the association information is carried in a *ProvideLocationInfonnation* information element (IE).

An embodiment of the present application provides a terminal device, including a memory, a transceiver, and a processor, where:
the memory is used for storing a computer program; the transceiver is used for transmitting and receiving data under control of the processor; the processor is used for executing the computer program in the memory and performing the method for transmitting timing error association information applied to the terminal device as described above.

An embodiment of the present application provides a network side device, including a memory, a transceiver, and a processor, where:
the memory is used for storing a computer program; the transceiver is used for transmitting and receiving data under control of the processor; the processor is used for executing the computer program in the memory and performing the method for transmitting timing error association information applied to the network side device as described above.

An embodiment of the present application provides an apparatus for transmitting timing error association information, applied to a terminal device, where the apparatus includes:
a first transmitting module, used for transmitting association information between a sounding reference signal for positioning (SRS-Pos) resource or SRS-Pos resource set and transmission timing error information to a network side device.

An embodiment of the present application provides an apparatus for transmitting timing error association information, applied to a network side device, where the apparatus includes:
a second receiving module, used for receiving association information between a sounding reference signal for positioning (SRS-Pos) resource or SRS-Pos resource set and transmission timing error information transmitted from a terminal device;
a second positioning module, used for positioning the terminal device based on the association information.

An embodiment of the present application provides a processor readable storage medium, where the processor readable storage medium stores a computer program that, when executed by a processor, causes the processor to perform the method for transmitting timing error association information applied to the terminal device as described above.

An embodiment of the present application provides a processor readable storage medium, where the processor readable storage medium stores a computer program that, when executed by a processor, causes the processor to perform the method for transmitting timing error association information applied to the network side device as described above.

In the methods and apparatuses for transmitting timing error association information according to the embodiments of the present application, the terminal device reports the association information between the SRS-Pos resource or SRS-Pos resource set and the transmission timing error information to the network side device, the network side device may calculate the position of the terminal device based on the association information and by using different transmission timing errors based on different SRSs-Pos, the transmission timing error is more accurately estimated, or the impact of the transmission timing error may be eliminated, to avoid the impact of transmission timing error on the accuracy of terminal position calculation, and the positioning accuracy of the network side device in estimating the position of the terminal device is improved.

### BRIEF DESCRIPTION OF THE DRAWINGS

To provide a clearer explanation for the technical solutions in the embodiments of the present application or in the related art, a brief description is given to the accompanying drawings required in the description of the embodiments or the related art. The accompanying drawings in the following description are some embodiments of the present application. For those ordinarily skilled in the art, other accompanying drawings may be obtained based on these drawings without any creative effort.
FIG. 1 is a schematic diagram of an uplink positioning scheme according to the related art;
FIG. 2 is a first flowchart diagram of a method for transmitting timing error association information according to an embodiment of the present application;
FIG. 3 is a schematic diagram showing a location management function (LMF) requesting a capability of a user equipment (UE) and the UE reporting the capability according to an embodiment of the present application;
FIG. 4 is a schematic diagram showing an LMF requesting association information and UE reporting the association information according to an embodiment of the present application;
FIG. 5 is a schematic diagram of a granularity of association information according to an embodiment of the present application;
FIG. 6 is a second flowchart diagram of a method for transmitting timing error association information according to an embodiment of the present application;
FIG. 7 is a schematic structural diagram of a terminal device according to an embodiment of the present application;
FIG. 8 is a schematic structural diagram of a network side device according to an embodiment of the present application;
FIG. 9 is a schematic structural diagram of an apparatus for transmitting timing error association information applied to a terminal device according to an embodiment of the present application; and
FIG. 10 is a schematic structural diagram of an apparatus for transmitting timing error association information applied to a network side device according to an embodiment of the present application.

### DETAILED DESCRIPTION

In embodiments of the present application, the term "and/or" describes the association relationship of the associated objects, indicating three types of relationships. For example, A and/or B may represent: A exists alone, A and B exist simultaneously, and B exists alone. The character "j" generally indicates that the associated objects are in an "or" relationship.

The term "multiple" in the embodiments of the present application refers to two or more, similar to other quantifiers.

The following provides a clear and complete description for the technical solutions in the embodiments of the present application, in conjunction with the accompanying drawings. The described embodiments are only a part of the embodiments of the present application and not all of them. Based on the embodiments of the present application, all other embodiments obtained by those ordinarily skilled in the art without creative effort fall within the scope of protection of the present application.

For uplink (UL)-time difference of arrival (TDOA) positioning method in new radio (NR) access technology in the related art, a serving base station of a user equipment (UE) first needs to configure and transmit time and frequency resources for sounding reference signal for positioning (SRS-Pos) for the UE, and notify a location management function (LMF) of configuration information for the SRS-Pos. The LMF transmits the configuration information for the SRS-Pos to transmit and receive points (TRPs) around the UE. Each of the TRPs detects the SRS-Pos transmitted from the UE based on the configuration information for the SRS-Pos and obtains a time of arrival of the SRS-Pos and a UL relative time of arrival (RTOA) of the TRP itself. UL-TDOA generally adopts a network-based positioning mode, where each of the TRPs transmits the measured UL RTOA to the LMF, and the LMF uses the UL RTOA provided from each of the TRPs and other known information (such as a geographic coordinate of the TRP) to calculate a position of the terminal device.

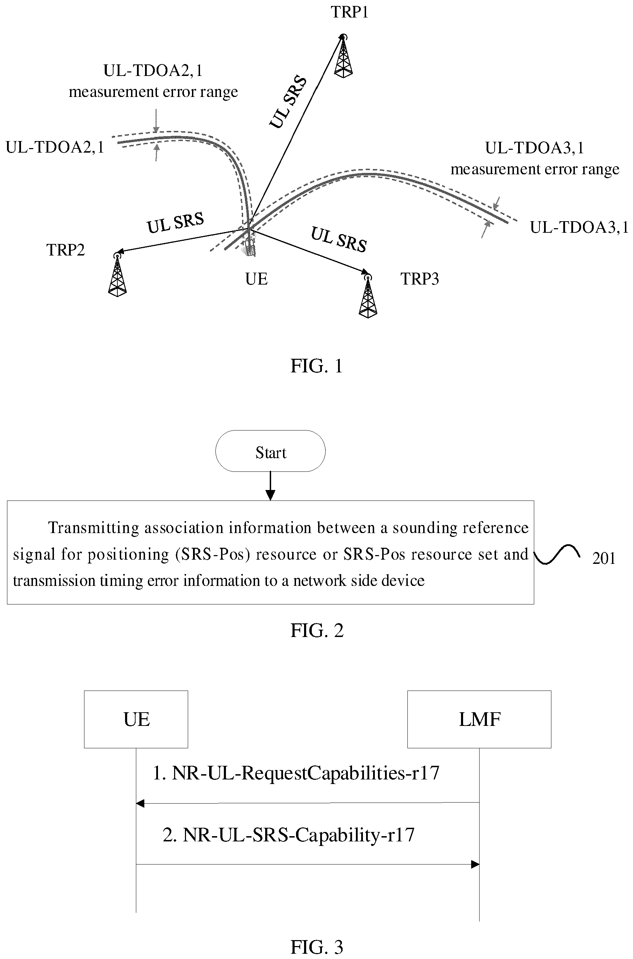

For the UL-TDOA, a similar method to downlink time difference of arrival (DL-TDOA) may be used to calculate the position of the terminal device. Assuming a total of N TRPs obtain N UL RTOA measurement values, i.e. RTOAi (i=1,..., N), by measuring the SRS-Pos transmitted from UE, RTOAi mainly depends on a distance between the UE and the TRPi, a time offset between a clock of the UE and a clock of the TRPi, and a measurement error. If a TRP (such as TRPj) is selected as a reference TRP from these N TRPs, and the UL RTOA measured by the TRPj is subtracted from the UL RTOAs measured by other TRPs, then N-1 TDOAs may be obtained: TDOA_(i, j) = RTOA_i - RTOAJ (i = 1,.., N; i ≠ j). If the clock of the TRPi is completely synchronized with the clock of the TRPj, then TDOA_(i, j) (when converted to distance) represents a difference between a distance from UE to TRPi and a distance from UE to TRPj, and TDOA_(i, j) further includes the time offset between the clock of the TRPi and the clock of the TRPj if the clock of the TRPi is not completely synchronized with the clock of the TRPj. The influence of time offset between the UE and each of the TRPs has been eliminated during subtraction. Like reference signal time difference (RSTD) measurement, each TDOA_(i, j) measurement value may form a hyperbola: focuses of the hyperbola is TRPi and TRPj, the difference between a distance from a point of the hyperbola to TRPi and a distance from the point of the hyperbola to TRPj is TDOA_(i, j), and the position of the terminal device is a point on the hyperbola. Like DL-TDOA, the position of the terminal device may be obtained by calculating N-1 hyperbola equations composed of N-1 TDOA measurement values. As shown in FIG. 1, an example of using three TRPs to obtain UL-TDOA measurement values for 2D positioning of a UE is shown.

In the related art, as mentioned above, for the UL-TDOA positioning method, in the relevant protocols, when positioning time measurement results such as UL RTOA are calculated, the protocol assumes that time measurement is performed at an antenna connector position. However, the time measurement position of the signal is in a baseband unit, causing a time measurement error, where the time measurement error exists for both SRS-Pos signal transmission and signal reception, and is referred to as a transmission timing error and a reception timing error. The timing error may lead to inaccurate measurement results for all time-based positioning measurement methods, including UL-TDOA, thereby affecting the final positioning accuracy. Moreover, these transmission timing error and reception timing error are associated with the hardware link and are time-variant, that is, measurement results corresponding to different radio frequency links or different time have different transmission/reception timing errors. When the UE transmits SRS-Pos resources through different radio frequency (RF) links or at different time, the SRS-Pos resources may have different transmission timing errors. Therefore, it is necessary to notify the LMF of the association information between the SRS-Pos resource and the transmission timing error to assist the LMF in completing positioning calculations.

In the related art, in the UL-TDOA positioning method, the protocol does not specify how the terminal device reports the association information between SRS-Pos and transmission timing error to the LMF, including how the LMF requests the association information from the UE, how the UE reports the association information to the LMF, as well as the specific content and format design of the association information.

Therefore, methods for transmitting timing error association information in the embodiments of the present application are provided. In the methods, UE reports the association information between an SRS-Pos resource or SRS-Pos resource set and the transmission timing error information directly or indirectly to a network side device to assist the network side device in completing UE positioning.

FIG. 2 is a first flowchart diagram of a method for transmitting timing error association information according to an embodiment of the present application. As shown in FIG. 2, the method for transmitting timing error association information may be performed by a terminal device, such as a mobile phone, etc. The method includes the following steps.

Step 201: transmitting association information between a sounding reference signal for positioning (SRS-Pos) resource or SRS-Pos resource set and transmission timing error information to a network side device.

In an embodiment, the terminal device transmits the association information between the SRS-Pos resource or SRS-Pos resource set and the transmission timing error information to the network side device.

Each SRS-Pos resource set includes multiple SRS-Pos resources, and each SRS-Pos resource has a corresponding ID as an identifier. Similarly, the SRS-Pos resource set also has a corresponding ID. The association information may be in various forms, such as the association information between the SRS-Pos resource ID and the transmission timing error information ID, or the association information between the SRS-Pos resource set ID and the transmission timing error information ID, or the association information between the SRS-Pos resource set ID, the SRS-Pos resource ID, and the transmission timing error information ID.

In the method for transmitting timing error association information according to the embodiments of the present application, the terminal device reports the association information between the SRS-Pos resource or SRS-Pos resource set and the transmission timing error information to the network side device, the network side device may calculate the position of the terminal device based on the association information and by using different transmission timing errors based on different SRSs-Pos, then the transmission timing error is more accurately estimated, or the impact of the transmission timing error may be eliminated, to avoid the impact of transmission timing error on the accuracy of calculating the position of the terminal device, which improves the positioning accuracy of the network side device in estimating the position of the terminal device.

In an embodiment, transmitting the association information between the SRS-Pos resource or SRS-Pos resource set and the transmission timing error information to the network side device includes:
transmitting the association information to a location management function (LMF); or
transmitting the association information to a base station; or
transmitting the association information to an LMF via a base station;
where the network side device includes the LMF or the base station.

In an embodiment, the association information between the SRS-Pos resource or SRS-Pos resource set and the transmission timing error information transmitted from the terminal device may be directly transmitted from the terminal device to the LMF, or transmitted from the terminal device to the base station, or transmitted from the terminal and forwarded to the LMF via the base station; the network side device includes the LMF or the base station.

In the method for transmitting timing error association information according to the embodiments of the present application, the terminal device reports the association information between the SRS-Pos resource or SRS-Pos resource set and the transmission timing error information to the network side device, the network side device may calculate the position of the terminal device based on the association information and by using different transmission timing errors based on different SRSs-Pos, then the transmission timing error is more accurately estimated, or the impact of the transmission timing error may be eliminated, to avoid the impact of transmission timing error on the accuracy of calculating the position of the terminal device, which improves the positioning accuracy of the network side device in estimating the position of the terminal device.

In an embodiment, the association information is determined in any of the following ways:
determining association information between an SRS-Pos resource identifier (ID) or SRS-Pos resource set ID and a transmission timing error information ID based on the SRS-Pos resource ID or SRS-Pos resource set ID; or
determining association information between a transmission timing error information ID and an SRS-Pos resource ID or SRS-Pos resource set ID based on the transmission timing error information ID; or
determining the association information based on whether SRS-Pos resources in the SRS-Pos resource set belong to a same transmission timing error information ID; or
determining the association information based on whether the SRS-Pos resource sets belong to a same transmission timing error information ID.

In an embodiment, the association information may be determined in multiple ways, such as in any of the following ways.

Way 1: based on the SRS-Pos resource ID or the SRS-Pos resource set ID, the SRS-Pos resource ID or the SRS-Pos resource set ID is mapped to the corresponding transmission timing error information ID;
for example, based on the SRS-Pos resource ID, the corresponding candidate solution 1 is:
SRS-Pos resource ID-1 (belonging to SRS-Pos resource set ID-1): transmission timing error information ID-1;
SRS-Pos resource ID-2 (belonging to SRS-Pos resource set ID-1): transmission timing error information ID-1;
SRS-Pos resource ID-3 (belonging to SRS-Pos resource set ID-1): transmission timing error information ID-2;
(in an embodiment) transmission time difference information of the SRS-Pos resources may also be included, for example, the transmission time difference between SRS-Pos-1 and SRS-Pos-2 = the transmission time of SRS-Pos-1 (time of the antenna port) - the transmission time of SRS-Pos-2 (time of the antenna port).

A possible mapping relationship for candidate solution 1 is shown in Table 1.

**Table 1: schematic table of candidate solution 1 for the association information**

| SRS-Pos resource set ID | SRS-Pos resource ID | Transmission timing error information ID |
|---|---|---|
| SRS-Pos resource set ID-1 | SRS-Pos resource ID-1 | Transmission timing error information ID-1 |
| | SRS-Pos resource ID-2 | Transmission timing error information ID-1 |
| | SRS-Pos resource ID-3 | Transmission timing error information ID-2 |
| SRS-Pos resource set ID-2 | SRS-Pos resource ID-4 | Transmission timing error information ID-4 |
| | SRS-Pos resource ID-5 | Transmission timing error information ID-6 |
| SRS-Pos resource set ID-3 | SRS-Pos resource ID-6 | Transmission timing error information ID-8 |
| | SRS-Pos resource ID-7 | Transmission timing error information ID-9 |

Way 2: the association information is determined based on the transmission timing error information ID and the transmission timing error information ID is mapped to the corresponding SRS-Pos resource ID;
for example, based on the transmission timing error information ID, the corresponding candidate solution 2 is:
transmission timing error information ID-1: SRS-Pos resource ID-1 (belonging to SRS-Pos resource set ID-1), SRS-Pos resource ID-2 (belonging to SRS-Pos resource set ID-1), SRS-Pos resource ID-3 (belonging to SRS-Pos resource set ID-1);
transmission timing error information ID-2: SRS-Pos resource ID-4 (belonging to SRS-Pos resource set ID-1), SRS-Pos resource ID-5 (belonging to SRS-Pos resource set ID-1);
transmission timing error information ID-3: SRS-Pos resource ID-6 (belonging to SRS-Pos resource set ID-2), SRS-Pos resource ID-7 (belonging to SRS-Pos resource set ID-1);

**Table 2: schematic table of candidate solution 2 for the association information**

| Transmission timing error information ID | SRS-Pos resource ID | SRS-Pos resource set ID |
|---|---|---|
| Transmission timing error information ID-1 | SRS-Pos resource ID-1 | SRS-Pos resource set ID-1 |
| | SRS-Pos resource ID-2 | |
| | SRS-Pos resource ID-3 | |
| Transmission timing error information ID-2 | SRS-Pos resource ID-4 | |
| | SRS-Pos resource ID-5 | |
| Transmission timing error information ID-3 | SRS-Pos resource ID-6 | SRS-Pos resource set ID-2 |
| | SRS-Pos resource ID-7 | SRS-Pos resource set ID-3 |

Way 3: the association information is determined based on whether the SRS-Pos resources in the SRS-Pos resource set belong to a same transmission timing error information ID.

A reference transmission timing error information ID is determined and compared with a transmission timing error information ID corresponding to each of the SRS-Pos resources in the SRS-Pos resource set, if both of them are the same, it may be determined that the information included in the transmission timing error information corresponding to the SRS-Pos resource ID is the same as the reference transmission timing error information ID.

For example, whether the transmission timing error information ID corresponding to each of the SRS-Pos resources in the SRS-Pos resource set is the same as the reference transmission timing error information ID is determined, corresponding to candidate solution 3 shown in table 3:

**Table 3: schematic table of candidate solution 3 for the association information**

| SRS-Pos resource set ID | SRS-Pos resource ID | Whether belonging to the same transmission timing error information ID |
|---|---|---|
| SRS-Pos resource set ID-1 | SRS-Pos resource ID-1 | Yes |
| | SRS-Pos resource ID-2 | No |
| | SRS-Pos resource ID-3 | Yes |
| SRS-Pos resource set ID-2 | SRS-Pos resource ID-4 | Yes |
| | SRS-Pos resource ID-5 | No |
| SRS-Pos resource set ID-3 | SRS-Pos resource ID-6 | No |
| | SRS-Pos resource ID-7 | Yes |

Way 4: the association information is determined based on whether the SRS-Pos resource sets belong to a same transmission timing error information ID.

A reference transmission timing error information ID is determined and compared with a transmission timing error information ID corresponding to the SRS-Pos resource set, if both of them are the same, it may be determined that the information included in the transmission timing error information corresponding to each of the SRS-Pos resource IDs in the SRS-Pos resource set is the same as the reference transmission timing error information ID.

In the method for transmitting timing error association information according to an embodiment of the present application, the terminal device transmits the association information between the SRS-Pos resource or SRS-Pos resource set and the transmission timing error information directly or indirectly to the LMF or the base station. The association information may be flexibly configured in various ways, suitable for different scenarios, and may be flexibly configured according to different scenarios to improve resource utilization.

In an embodiment, the method further includes:
transmitting multiple SRSs-Pos using a same radio frequency link during one positioning measurement.

In an embodiment, to ensure that multiple SRS-Pos resources transmitted from the terminal device have the same transmission timing error during positioning measurement, the base station configures the terminal to transmit multiple SRSs-Pos using the same radio frequency link during one positioning measurement.

In the method for transmitting timing error association information according to an embodiment of the present application, the terminal device transmits the association information between the SRS-Pos resource or SRS-Pos resource set and the transmission timing error information directly or indirectly to the LMF or the base station, where multiple SRS-Pos resources have the same transmission timing error, the base station configures the terminal to transmit the multiple SRSs-Pos using the same radio frequency link during one positioning measurement, which flexibly configures resources and improves resource utilization.

In an embodiment, the method further includes:
reporting a mapping relationship between the transmission timing error information ID and a range of transmission timing error to the network side device.

In an embodiment, the terminal may provide other additional information as well as the association information, such as a mapping relationship between the transmission timing error information ID and a range of transmission timing error to the LMF or the base station. Through the mapping relationship, it helps the LMF or the base station to estimate transmission timing error more accurately, or the impact of transmission timing error may be eliminated, and the impact of transmission timing errors on the accuracy of terminal position calculation is avoided.

In an embodiment, the mapping relationship between the transmission timing error information ID and the range of transmission timing error is provided by the following solutions.

Candidate solution A: the network side (pre-) configures the mapping relationship, and the UE and the base station (gNB) select a mapping relationship table to be used and report the mapping relationship table to the LMF; or,
the network side (pre-) configures the mapping relationship, and the UE and the LMF select a mapping relationship table to be used and report the mapping relationship table to the base station.

Candidate solution B: the network side does not (pre-) configure the mapping relationship, and the UE and the base station (gNB) configure the mapping relationship table and report the mapping relationship table to the LMF; or,
the network side does not (pre-) configure the mapping relationship, and the UE and the LMF configure the mapping relationship table and report the mapping relationship table to the base station.

In an embodiment, the method further includes:
reporting timestamp information corresponding to the association information for indicating a validity period of the association information to the network side device.

In an embodiment, when the terminal device transmits association information to the LMF or the base station (gNB), the association information includes a timestamp for the validity period of the association information, for indicating the validity period of the association information. That is, within the validity period, the association information is valid, and if the validity period expires, the association information is invalid.

For example, the mapping relationship between the range of the transmission timing error and the transmission timing error group is shown in the table 4 below.

**Table 4: Schematic table of the mapping relationship between the range of the transmission timing error and the transmission timing error group**

| Transmission timing error information ID | Range of the transmission timing error (microsecond, µs) |
|---|---|
| Transmission timing error information ID-1 | [-1.0us, -0.5us] |
| Transmission timing error information ID-2 | [-0.5us, 0.5us] |
| Transmission timing error information ID-3 | [-0.5us, 1.0us] |

In an embodiment, the method further includes:
in case that the association information is determined to be invalid based on the timestamp information, transmitting updated association information to the network side device.

In an embodiment, after the terminal device determines that the association information is invalid based on the timestamp information, the terminal device transmits the updated association information to the network side device. Ways for triggering the terminal device to transmit the updated association information are various. In an embodiment, by periodically monitoring the validity of the association information, if invalidity occurs, the terminal device timely transmits the updated association information to the network side device; or once the network side device detects that the association information is invalid, the network side device transmits corresponding messages to trigger the terminal device to transmit the updated association information, etc.

In the method for transmitting timing error association information according to an embodiment of the present application, the terminal device transmits the association information between the SRS-Pos resource or SRS-Pos resource set and the transmission timing error information directly or indirectly to the LMF or the base station and provides additional information of the validity period when transmitting the timing error information, which ensures the validity of the timing error information obtained by the network side, avoids the impact of transmission timing error on the accuracy of terminal position calculation.

In an embodiment, the method further includes:
reporting configuration information of a sounding reference signal for MIMO (SRS-MIMO) and/or association information between SRS-MIMO and the transmission timing error information to the network side device.

In an embodiment, for the network side device supporting MIMO, the terminal device may also transmit corresponding configuration information of the SRS-MIMO and/or the association information between SRS-MIMO and the transmission timing error information to the network side device.

The association information corresponding to MIMO includes three forms:
an association relationship between the configuration information of the SRS-MIMO and the transmission timing error information;
an association relationship between the SRS-MIMO and the transmission timing error information; and
an association relationship between the configuration information of the SRS-MIMO and the SRS-MIMO, and the transmission timing error information.

In the method for transmitting timing error association information according to an embodiment of the present application, the terminal device transmits the association information between the SRS-Pos resource or SRS-Pos resource set and the transmission timing error information directly or indirectly to the LMF or the base station and provides additional information of configuration information of the SRS-MIMO and/or the association information between SRS-MIMO and the transmission timing error information when transmitting the timing error information, the association information is effectively supplemented and the determination of MIMO associated timing errors is supported, which reduces the impact of transmission timing errors on the accuracy of terminal position calculation to a greater extent.

In an embodiment, the method further includes:
after receiving a capability request transmitted from the network side device, transmitting a response message to the network side device to indicate whether the terminal device is able to provide the association information.

In an embodiment, before the terminal device reports the association information between the SRS-Pos resource or SRS-Pos resource set and the transmission timing error information to the network side device, the LMF or the base station may transmit a capability request to the terminal device in advance, requesting the terminal device to report whether the terminal device is able to report the association information.

In an embodiment, the method further includes:
in case that the terminal device is able to provide the association information, carrying the association information in the response message.

In an embodiment, in case that the terminal device is able to provide the association information, the association information is carried in the response message to prevent the LMF or the base station from transmitting further requests to the terminal for providing the association information, which is more effective in network resource utilization.

The schematic diagram of the procedure for the solution that the LMF transmits capability request and the UE reports capability is shown in FIG. 3. In an embodiment, the UE reports capability using the following two reporting ways.

Reporting way 1: the LMF transmits a capability request signaling (*NR-UL-RequestCapabilities-rl7)* to the UE, and the capability request signaling carries an association information request. In the signaling, the LMF requests the UE capability and inquires whether the UE is able to provide the association information.

The UE reports whether the UE is able to provide the association information in the UE capability reporting signaling (*NR-UL-SRS-Capability-r17*).

Reporting way 2: the LMF transmits a capability request signaling (*NR-UL-RequestCapabilities-rl7)* to the UE, and the capability request signaling carries an association information request. In the signaling, the LMF requests the UE capability and inquires if the UE is able to provide the association information.

The UE reports whether the UE is able to provide the association information in the UE capability reporting signaling (*NR-UL-SRS-Capability-r17*). In case that the UE is able to provide the association information, the UE directly provides the association information in the capability reporting signaling.

Compared to the reporting way 1, the UE in the reporting way 2 not only provides whether the UE is able to provide the association information, but also directly provides the association information in the capability reporting signaling in case that the UE is able to provide the association information. Thus, the association information may be reported to the LMF in advance, making it easier for the LMF to proceed with the next step of processing.

Similarly, the base station may also transmit the capability request signaling to the terminal device, inquires whether the terminal device is able to provide the association information. All the specific implementation steps are the same as those on the LMF and may achieve the same technical effect, which are not repeated here.

In an embodiment, the method further includes:
after receiving an association information request message transmitted from the network side device, determining a reporting content and/or a reporting path of the association information based on an indication of the association information request message, where,
the reporting path includes directly or indirectly reporting the association information; and
the reporting content includes a granularity, an additional content, and a format of the association information.

In an embodiment, the network side device transmits the association information request message, and the terminal device determines the specific content to be reported in the association information and/or the reporting path based on the indication of the association information request message. The reporting path includes directly or indirectly reporting the association information; the reporting content includes a granularity, an additional content, and a format of the association information.

In an embodiment, determining the reporting content and the reporting path of the association information (the following four information is optional) includes:
determining to report the association information directly or indirectly to the LMF or the base station;
determining the granularity of the association information;
determining the additional content of the association information; and/or
determining the format of the association information.

The granularity of the association information refers to the degree of refinement in data statistics within a same dimension. The higher the degree of refinement, the smaller the granularity level; on the contrary, the lower the degree of refinement, the greater the granularity level. For example, the format of the association timing error information requires a format in hour/minute/second, or hour/minute/second/microsecond.

The additional content of the association information includes the valid timestamp of the association information, a requirement for updating the association information, and the association information between SRS-MIMO and the transmission timing error and so on.

The format of the association information includes, for example, the SRS-Pos resource ID and the transmission timing error information ID, or the SRS-Pos resource set ID and the transmission timing error information ID.

In an embodiment, transmitting the association information to the network side device includes:
transmitting *ProvideLocationlnformation* to the network side device and carrying the association information in a *ProvideLocationlnformation* information element (IE).

In an embodiment, the terminal device transmits corresponding association information based on the format required in the network side request information.

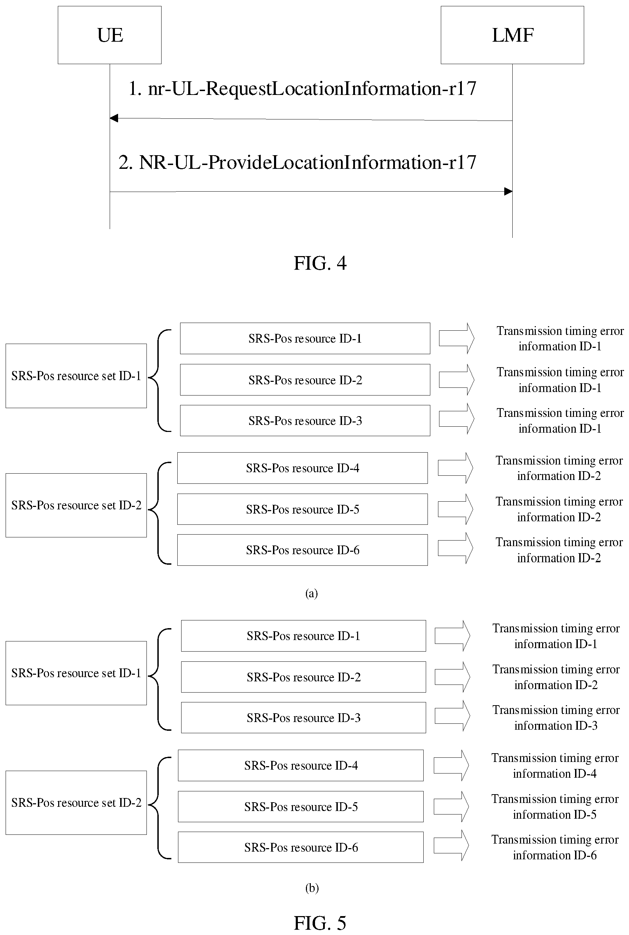

For example, in case that the UE is able to provide association information, the LMF transmits the association information request signaling (*nr-UL-RequestLocationInfonnation-r17*) to the UE. The UE determines the reporting content and the reporting path of the association information according to the indication in the association information request signaling provided from the LMF, and reports the association information in the *ProvideLocationlnformation* (*NR-UL-ProvideLocationInformation-r17*) IE, as shown in FIG. 4.

Similarly, the base station may also transmit the capability request signaling to the terminal device to inquire whether the terminal device is able to provide the association information, or transmit the association information request signaling to limit the format of the association information transmitted from the terminal device. All the specific implementation steps are the same as those on the LMF and may achieve the same technical effect, which are not repeated here.

In the method for transmitting timing error association information according to an embodiment of the present application, the terminal device transmits the association information between the SRS-Pos resource or SRS-Pos resource set and the transmission timing error information directly or indirectly to the LMF or the base station. Before the terminal transmits the timing error information, the LMF or the base station may configure the reporting content and reporting path for the terminal to transmit the association information in advance, and a more precise requirement for matching the network side has been achieved.

In an embodiment, in case that the association information is configured to the SRS-Pos resource set, it indicates that all SRS-Pos resources in the SRS-Pos resource set have same transmission timing error information; and
in case that the association information is configured to the SRS-Pos resource, it indicates that different SRSs-Pos resources in the SRS-Pos resource set have different transmission timing error information.

In an embodiment, the association information is at the SRS-Pos resource set level or SRS-Pos resource level, that is, the association information between the SRS-Pos resource set or SRS-Pos resource and the transmission timing error information. As shown in FIG. 5, an arrow represents the corresponding association relationship.

In case that the association information is configured to the SRS-Pos resource set, it indicates that all SRS-Pos resources in the SRS-Pos resource set have the same transmission timing error information, as shown in FIG. 5 (a).

In case that the association information is configured to the SRS-Pos resource, it indicates that different SRSs-Pos resources in the SRS-Pos resource set have different transmission timing error information, as shown in FIG. 5 (b).

In the method for transmitting timing error association information according to an embodiment of the present application, the terminal device reports the association information between the SRS-Pos resource or SRS-Pos resource set and the transmission timing error information to the network side device, the network side device may calculate the position of the terminal based on the association information and by using different transmission timing errors based on different SRSs-Pos, the transmission timing error is more accurately estimated, or the impact of the transmission timing error may be eliminated, to avoid the impact of transmission timing error on the accuracy of terminal position calculation, and the positioning accuracy of the network side device in estimating the position of the terminal device is improved.

In an embodiment, the transmission timing error information includes one or more of transmission timing error group information, transmission timing error value information, transmission phase center deviation information, and transmission phase center deviation group information.

In an embodiment, the transmission timing error information refers to at least one of the transmission timing error group information, the transmission timing error value information, the transmission phase center deviation information, or the transmission phase center deviation group information.

In an embodiment, a type of transmission timing error information is pre-configured through an RRC signaling. For example, 2 bits represent that the transmission timing error information is any one or more of the transmission timing error group information, the transmission timing error value information, the transmission phase center deviation information, and the transmission phase center deviation group information.

In the method for transmitting timing error association information according to an embodiment of the present application, the terminal device reports the association information between the SRS-Pos resource or SRS-Pos resource set and the transmission timing error information to the network side device, the network side device may calculate the terminal position based on the association information and by using different transmission timing errors based on different SRSs-Pos, the transmission timing error is more accurately estimated, or the impact of the transmission timing error may be eliminated, to avoid the impact of transmission timing error on the accuracy of terminal position calculation, and the positioning accuracy of the network side device in estimating the position of the terminal device is improved.

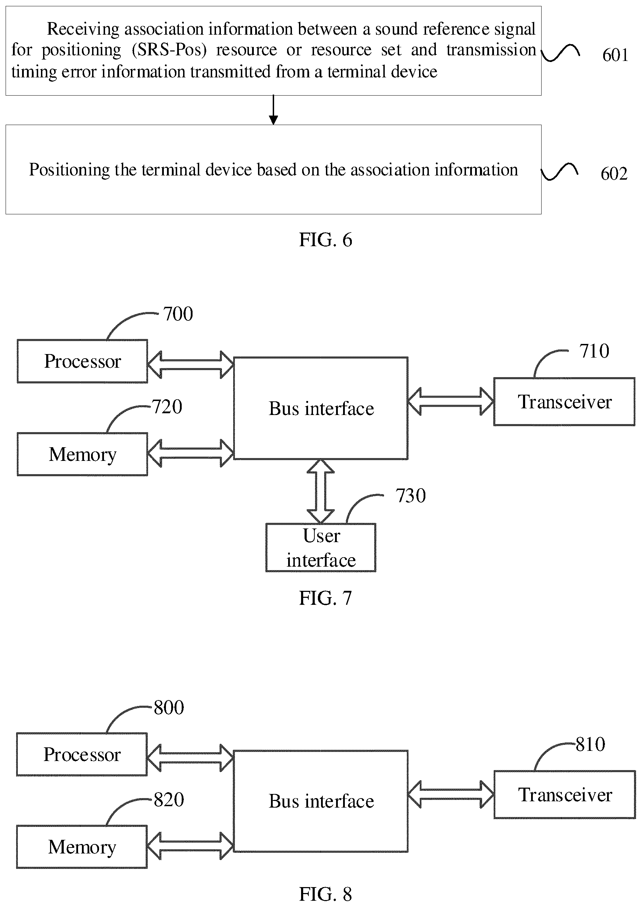

FIG. 6 is a second flowchart diagram of the method for transmitting timing error association information according to an embodiment of the present application. As shown in FIG. 6, An embodiment of the present application provides a method for transmitting timing error association information applied to a network side device, including:

Step 601: receiving association information between a sound reference signal for positioning (SRS-Pos) resource or resource set and transmission timing error information transmitted from a terminal device.

In an embodiment, the network side device receives the association information transmitted from the terminal device, and the association information is the association information between the SRS-Pos resource or SRS-Pos resource set and the transmission timing error information.

Step 602, positioning the terminal device based on the association information.

The network side device determines association relationships between different SRS-Pos resources or resource sets and the transmission timing error information based on the received association information;
TRP completes positioning time measurement based on the SRS-Pos resource, the network side device obtains the transmission timing error information corresponding to the same SRS-Pos resource used by TRP based on the association relationship between the SRS-Pos resource or SRS-Pos resource set and the transmission timing error information to correct the measurement results of positioning time of the TRP, and the terminal device is accurately positioned.

In the method for transmitting timing error association information according to an embodiment of the present application, the terminal device reports the association information between the SRS-Pos resource or SRS-Pos resource set and the transmission timing error information to the network side device, the network side device may calculate the terminal position based on the association information, select different transmission timing errors based on different SRSs-Pos, the transmission timing error is more accurately estimated, or the impact of the transmission timing error may be eliminated, to avoid the impact of transmission timing error on the accuracy of terminal position calculation, and the positioning accuracy of the network side device in estimating the position of the terminal device is improved.

In an embodiment, the association information is directly transmitted from the terminal device; or
the association information is transmitted from a base station; or
the association information is transmitted from the terminal device via the base station.

In an embodiment, the association information may be directly transmitted from the terminal device to a location management function (LMF), or transmitted from the terminal device to the base station, or transmitted from the terminal device to the base station and forwarded by the base station to the LMF; the network side device includes the LMF or the base station.

In the method for transmitting timing error association information according to an embodiment of the present application, the UE directly or indirectly reports the association information between the SRS-Pos resource or SRS-Pos resource set and the transmission timing error information to thee LMF or the base station, the LMF or the base station may calculate the position of the terminal based on the association information and by using different transmission timing errors based on different SRSs-Pos, and the transmission timing error is more accurately estimated. Alternatively, the impact of transmission timing errors may be eliminated to avoid the impact of transmission timing errors on the accuracy of terminal position calculation, and the positioning accuracy of the LMF or the base station in estimating the position of the terminal device is improved.

In an embodiment, the method further includes:
receiving a mapping relationship between a transmission timing error information ID and a range of transmission timing error transmitted from the terminal device.

In an embodiment, the LMF or the base station receives the association information transmitted from the terminal device while providing other additional information. The received information includes, for example, the mapping relationship between the transmission timing error information ID and the range of transmission timing error. The mapping relationship assists the LMF or the base station to estimate transmission timing errors more accurately, or eliminate the impact of transmission timing errors, and the impact of transmission timing errors on the accuracy of terminal position calculation is avoided.

The way of providing the mapping relationship between the transmission timing error information ID and the range of transmission timing error includes:
candidate solution C: determining a mapping relationship used by the terminal device in pre-configured mapping relationships and transmitting the mapping relationship used by the terminal device to the terminal device.

In an embodiment, the LMF determines the mapping relationship table used by the UE or the base station (gNB) based on the pre-configured mapping relationship, and then notifies the UE and the base station (gNB) through a signaling. That is, the LMF determines the mapping relationship used by the UE or the base station (gNB).

Alternatively, the base station determines the mapping relationship table used by the UE or the LMF based on the pre-configured mapping relationship, and then notifies the UE and the LMF through a signaling. That is, the base station determines the mapping relationship used by the UE or the LMF

In the method for transmitting timing error association information according to an embodiment of the present application, the terminal device reports the association information between the SRS-Pos resource or SRS-Pos resource set and the transmission timing error information to the LMF or the base station, and the LMF or the base station determines the mapping relationship between the transmission timing error information ID and the range of transmission timing error, the LMF or the base station may calculate the terminal position based on the association information and by using different transmission timing errors based on different SRSs-Pos, and the transmission timing error is more accurately estimated. Alternatively, the impact of transmission timing errors may be eliminated to avoid the impact of transmission timing errors on the accuracy of terminal position calculation, and the positioning accuracy of the LMF or the base station in estimating the position of the terminal device is improved.

The method further includes:
receiving timestamp information corresponding to the association information for indicating a validity period of the association information transmitted from the terminal device.

In an embodiment, the association information received by the LMF or the base station also includes timestamp information of a validity period of the association information. That is, when the terminal device transmits device association information to the LMF or the base station (gNB), a timestamp of the validity period of the association information is included, representing the validity time of the association information. That is, within the validity time, the association information is valid, and if the validity time expires, the association information is invalid.

In an embodiment, the method further includes:
in case that the association information is determined to be invalid based on the timestamp information, receiving updated association information transmitted from the terminal device.

In an embodiment, after the LMF or the base station determines that the association information is invalid based on valid timestamp information in the association information, the terminal device is required to provide updated association information; and ways for triggering the terminal device to transmit the updated association information are various. In an embodiment, the terminal device periodically monitors the validity of the association information, if invalidity occurs, timely transmits the updated association information to the network side device; or once the network side device detects the invalidity of the association information, the terminal device is triggered to transmit the updated association information, etc.

In the method for transmitting timing error association information according to an embodiment of the present application, the terminal device transmits the association information between the SRS-Pos resource or SRS-Pos resource set and the transmission timing error information directly or indirectly to the LMF or the base station and provides additional information of the validity period when transmitting the timing error information, which ensures the validity of the timing error information obtained by the network side, and avoids the impact of timing errors on the accuracy of terminal position calculation during transmission.

In an embodiment, the method further includes:
receiving configuration information of a sounding reference signal for MIMO (SRS-MIMO) and/or association information between SRS-MIMO and the transmission timing error information reported from the terminal device.

In an embodiment, for the network side device supporting MIMO, the LMF or the base station receives the configuration information of the SRS-MIMO and/or the association information between SRS-MIMO and the transmission timing error information reported from the terminal device.

The association information corresponding to MIMO includes three forms:
an association relationship between the configuration information of SRS-MIMO and the transmission timing error information;
an association relationship between the SRS-MIMO and the transmission timing error information; and
an association relationship between the configuration information of SRS-MIMO, the SRS-MIMO and the transmission timing error information.

The method for transmitting timing error association information according to an embodiment of the present application transmits the association information between the SRS-Pos resource or SRS-Pos resource set and the transmission timing error information directly or indirectly to the LMF or the base station through the UE, and provides additional information of the configuration information of the SRS-MIMO and/or the association information between SRS-MIMO and the transmission timing error information when transmitting the timing error information, the association information and supporting the determination of MIMO associated timing errors is effectively supplemented, and the impact of transmission timing errors on the accuracy of terminal position calculation to a greater extent is reduced.

In an embodiment, the method further includes:
after transmitting a capability request to the terminal device, receiving a response message transmitted from the terminal device, and the capability request is used to query whether the terminal device is able to provide the association information.

In an embodiment, the LMF may actively transmit the capability request to the terminal device to inquire whether the terminal device is able to provide the association information. And the LMF determines whether the terminal device is able to provide the association information based on the response message feedback from the terminal device.

For example, the LMF transmits a capability request signaling (*NR-UL-RequestCapabilities-rl7)* to the UE, and the capability request signaling carries an association information request. In the signaling, the LMF will request the capability of the UE and inquire if the UE is able to provide the association information.

The UE reports whether the UE is able to provide the association information in the UE capability reporting signaling (*NR-UL-SRS-Capability-r17*). Alternatively, if the UE is able to provide the association information, the association information is directly provided in the capability reporting signaling.

Through such approach, the LMF may obtain the association information in advance, facilitating the LMF to proceed with a next step of processing.

Similarly, the base station may also transmit the capability request signaling to the terminal device, asking if the terminal device is able to provide the association information. All the specific implementation steps are the same as those on the LMF side and may achieve the same technical effect, which will not be repeated here. The method for transmitting timing error association information according to an embodiment of the present application transmits the association information between the SRS-Pos resource or SRS-Pos resource set and the transmission timing error information to the LMF or the base station through the UE. The association information may also be actively obtained through the LMF or the base station transmitting the capability request. Thus, the LMF or the base station may calculate the terminal position based on the association information and select different transmission timing errors according to different SRSs-Pos, the transmission timing error is more accurately estimated. Alternatively, the impact of transmission timing errors may be eliminated to avoid the impact of transmission timing errors on the accuracy of terminal position calculation, and the positioning accuracy of the LMF or the base station in estimating the position of the terminal device is improved.

In an embodiment, the method further includes:
transmitting an association information request message to the terminal device, and the association information request message is used to indicate the terminal device to determine a reporting content and/or a reporting path of the association information, where:
the reporting path includes directly or indirectly reporting the association information; and
the reporting content includes a granularity, an additional content, and a format of the association information.

In an embodiment, the LMF or the base station transmits the association information request message, configures the specific content to be reported from the terminal device, and/or the reporting path, where the reporting path includes directly or indirectly reporting the association information; the reporting content includes a granularity, an additional content, and a format of the association information.

Determining the reporting content and path of the association information (the following four information is optional) includes:
determining report the association information whether directly or indirectly to the LMF or the base station;
determining the granularity of the association information;
determining the additional content of the association information; or
determining the format of the association information.

The granularity of the association information refers to the degree of refinement in data statistics within a same dimension. The higher the degree of refinement, the smaller the granularity level; on the contrary, the lower the level of refinement, the greater the granularity level. For example, the format of the related timing error information requires a format in hour/minute/second, or hour/minute/second/microsecond.

The additional content of the association information includes the valid timestamp of the association information, a requirement for updating the association information, and the association information between SRS-MIMO and the transmission timing error and so on.

The format of the association information includes, for example, the SRS-Pos resource ID and the transmission timing error information ID, or the SRS-Pos resource set ID and the transmission timing error information ID.

In the method for transmitting timing error association information according to an embodiment of the present application, the terminal device transmits the association information between the SRS-Pos resource or SRS-Pos resource set and the transmission timing error information to the LMF or the base station. The association information may also be actively obtained through the LMF or the base station transmitting the capability request. The LMF or the base station may configure the format of the association information transmitted from the terminal when transmitting the capability request, the association information obtained by the LMF or the base station better meets the requirement of the LMF or the base station. Thus, the LMF or the base station may calculate the terminal position based on the association information and select different transmission timing errors according to different SRSs-Pos, the transmission timing error is more accurately estimated. Alternatively, the impact of transmission timing errors may be eliminated to avoid the impact of transmission timing errors on the accuracy of terminal position calculation, and the positioning accuracy of the LMF or the base station in estimating the position of the terminal device is improved.

In an embodiment, receiving the association information transmitted from the terminal device includes:
receiving *ProvideLocationInfonnation* transmitted from the terminal device, where the association information is carried in a *ProvideLocationInfonnation* information element (IE).

In an embodiment, the LMF configures the required format in the capability request information and transmits to the terminal device. The terminal device transmits the corresponding association information based on the capability request information.

For example, if the UE is able to provide the association information, the LMF transmits the association information request signaling (*nr-UL-RequestLocationInformation-r17*) to the UE. The UE determines the reporting content and the reporting path of the association information based on the indications in the association information request signaling provided from the LMF, and reports the association information in the information element (IE) *"NR-UL-ProvideLocationInformation-r17".*

Similarly, the base station may also transmit the capability request signaling to the terminal device to inquire whether the terminal device is able to provide the association information, or transmit the association information request signaling to limit the format of the association information transmitted from the terminal. All the specific implementation steps are the same as those on the LMF side and may achieve the same technical effect, which will not be repeated here.

In the method for transmitting timing error association information according to an embodiment of the present application, the terminal device transmits the association information between the SRS-Pos resource or SRS-Pos resource set and the transmission timing error information directly or indirectly to the LMF or the base station. Before transmitting the timing error information, the LMF or the base station may configure the reporting content and the reporting path for the terminal to transmit the association information in advance, and the network side requirements is matched more precisely. The association information obtained by the LMF or the base station better meets the requirement of the LMF or the base station. Thus, the LMF or the base station may calculate the terminal position based on the association information and select different transmission timing errors according to different SRSs-Pos, and the transmission timing error is more accurately estimated. Alternatively, the impact of transmission timing errors may be eliminated to avoid the impact of transmission timing errors on the accuracy of terminal position calculation, and the positioning accuracy of the LMF or the base station in estimating the position of the terminal device is improved.

FIG. 7 is a schematic structural diagram of a terminal device according to an embodiment of the present application. As shown in FIG. 7, the terminal device includes a memory 720, a transceiver 710, and a processor 700, where the processor 700 and memory 720 may also be arranged physically separately.

The memory 720 is used for storing a computer program; and the transceiver 710 is used for transmitting and receiving data under control of the processor 700.

In an embodiment, the transceiver 710 is used for receiving and transmitting data under the control of the processor 700.

In FIG. 7, bus architecture may include any number of interconnected buses and bridges, which are connected together by one or more processors represented by processor 700 and various circuits of memory represented by the memory 720. The bus architecture may also link various other circuits such as peripheral devices, regulators, and power management circuits together, which are well-known in the art. Therefore, the present application will not further describe them. The bus interface provides an interface. The transceiver 710 may be a plurality of elements, including a transmitter and a receiver, providing a unit for communicating with various other devices over transmission media, including wireless channels, wired channels, optical cables, and other transmission media. For different user equipments, the user interface 730 may also be an interface that may connect external and internal devices, including but not limited to keyboards, displays, speakers, microphones, joysticks, etc.

The processor 700 is responsible for managing the bus architecture and general processing, and the memory 720 may store the data used by the processor 700 during operations.

The processor 700 may be a central processing unit (CPU), an application specific integrated circuit (ASIC), a field-programmable gate array (FPGA) or a complex programmable logic device (CPLD), the processor can also adopt a multi-core architecture.

The processor 700 calls the computer program stored in the memory 720, and executes any of the methods applied to the terminal device provided in the embodiments of the present application based on the obtained executable instructions. The method includes:
transmitting association information between a sounding reference signal for positioning (SRS-Pos) resource or SRS-Pos resource set and transmission timing error information to a network side device.

In an embodiment, transmitting the association information between the SRS-Pos resource or SRS-Pos resource set and the transmission timing error information to the network side device includes:
transmitting the association information to a location management function (LMF); or
transmitting the association information to a base station; or
transmitting the association information to an LMF via a base station;
the network side device includes the LMF or the base station.

In an embodiment, the association information is determined in any of the following ways:
determining association information between an SRS-Pos resource identifier (ID) or SRS-Pos resource set ID and a transmission timing error information ID based on the SRS-Pos resource ID or SRS-Pos resource set ID; or
determining association information between a transmission timing error information ID and an SRS-Pos resource ID or SRS-Pos resource set ID based on the transmission timing error information ID; or
determining the association information based on whether the SRS-Pos resources in the SRS-Pos resource set belong to a same transmission timing error information identifier (ID); or
determining the association information based on whether the SRS-Pos resource sets belong to a same transmission timing error information identifier (ID).

In an embodiment, the method further includes:
transmitting multiple SRSs-Pos during one positioning measurement using a same radio frequency link.

In an embodiment, the method further includes:
reporting a mapping relationship between the transmission timing error information ID and a range of transmission timing error to the network side device.

In an embodiment, the network side device configures the mapping relationship, the terminal device selects the mapping relationship to be used and reports the mapping relationship to the network side device; or
the terminal device configures the mapping relationship and reports the mapping relationship to the network side device.

In an embodiment, the method further includes:
reporting timestamp information corresponding to the association information for indicating a validity period of the association information to the network side device.

In an embodiment, the method further includes:
in case that the association information is determined to be invalid based on the timestamp information, transmitting updated association information to the network side device.

In an embodiment, the method further includes:
reporting configuration information of a sounding reference signal for MIMO (SRS-MIMO) and/or association information between SRS-MIMO and the transmission timing error information to the network side device.

In an embodiment, the method further includes:
after receiving a capability request transmitted from the network side device, transmitting a response message to the network side device to indicate whether the terminal device is able to provide the association information.

In an embodiment, the method further includes:
in case that the terminal device is able to provide the association information, carrying the association information in the response message.

In an embodiment, the method further includes:
after receiving an association information request message transmitted from the network side device, determining a reporting content and/or a reporting path of the association information based on an indication of the association information request message, where:
the reporting path includes directly or indirectly reporting the association information; and
the reporting content includes a granularity, an additional content, and a format of the association information.

In an embodiment, transmitting the association information to the network side device includes:
transmitting *ProvideLocationlnformation* to the network side device and carrying the association information in a *ProvideLocationlnformation* information element (IE).

In an embodiment, in case that the association information is configured to the SRS-Pos resource set, it indicates that all SRS-Pos resources in the resource set have same transmission timing error information; and
in case that the association information is configured to the SRS-Pos resource, it indicates that different SRSs-Pos resources in the resource set have different transmission timing error information.

In an embodiment, the transmission timing error information includes one or more of transmission timing error group information, transmission timing error value information, transmission phase center deviation information, and transmission phase center deviation group information.

It should be noted that the above-mentioned device according to an embodiment of the present application may achieve all the method steps implemented in the above method embodiments and achieve the same technical effects. The same parts and beneficial effects as in the method embodiments in this embodiment will not be elaborated in detail.

FIG. 8 is a schematic structural diagram of a network side device according to an embodiment of the present application. As shown in FIG. 8, the network side device includes a memory 820, a transceiver 810, and a processor 800, where the processor 800 and memory 820 may also be arranged physically separately.

The memory 820 is used for storing a computer program; and the transceiver 810 is used for transmitting and receiving data under control of the processor 800.

In an embodiment, the transceiver 810 is used for receiving and transmitting data under the control of the processor 800.

In FIG. 8, bus architecture may include any number of interconnected buses and bridges, which are connected together by one or more processors represented by processor 800 and various circuits of memory represented by the memory 820. The bus architecture may also link various other circuits such as peripheral devices, regulators, and power management circuits together, which are well-known in the art. Therefore, the present application will not further describe them. The bus interface provides an interface. The transceiver 810 may be a plurality of elements, including a transmitter and a receiver, providing a unit for communicating with various other devices over transmission media, including wireless channels, wired channels, optical cables, and other transmission media.

The processor 800 is responsible for managing the bus architecture and general processing, and the memory 820 may store the data used by the processor 800 during operations.

The processor 800 may be a CPU, an ASIC, an FPGA, or a CPLD, and the processor may also adopt a multi-core architecture.

The processor 800 calls the computer program stored in the memory 820 and and executes any of the methods applied to the network side device provided in the embodiments of the present application based on the obtained executable instructions. The method includes:
receiving association information between a sounding reference signal for positioning (SRS-Pos) resource or SRS-Pos resource set and transmission timing error information transmitted from a terminal device;
positioning the terminal device based on the association information.

In an embodiment, the method further includes:
receiving a mapping relationship between a transmission timing error information ID and a range of transmission timing error transmitted from the terminal device.

In an embodiment, the method further includes:
determining a mapping relationship used by the terminal device in pre-configured mapping relationships and transmitting the mapping relationship used by the terminal device to the terminal device.

In an embodiment, the method further includes:
receiving timestamp information corresponding to the association information for indicating a validity period of the association information transmitted from the terminal device.

In an embodiment, the method further includes:
in case that the association information is determined to be invalid based on the timestamp information, receiving updated association information transmitted from the terminal device.

In an embodiment, the method further includes:
receiving configuration information of a sounding reference signal for MIMO (SRS-MIMO) and/or association information between SRS-MIMO and the transmission timing error information reported from the terminal device.

In an embodiment, the method further includes:
after transmitting a capability request to the terminal device, receiving a response message transmitted from the terminal device, where the response message is used for querying whether the terminal device is able to provide the association information.

In an embodiment, the method further includes:
transmitting an association information request message to the terminal device, where the association information request message is used to indicate the terminal device to determine a reporting content and/or a reporting path of the association information,
the reporting path includes directly or indirectly reporting the association information; and
the reporting content includes a granularity, an additional content, and a format of the association information.

In an embodiment, receiving the association information transmitted from the terminal device includes:
receiving *ProvideLocationInfonnation* transmitted from the terminal device, where the association information is carried in a *ProvideLocationInfonnation* information element (IE).

It should be noted that the above-mentioned device according to an embodiment of the present application may achieve all the method steps implemented in the above method embodiments and achieve the same technical effects. The same parts and beneficial effects as in the method embodiments in this embodiment will not be elaborated in detail.

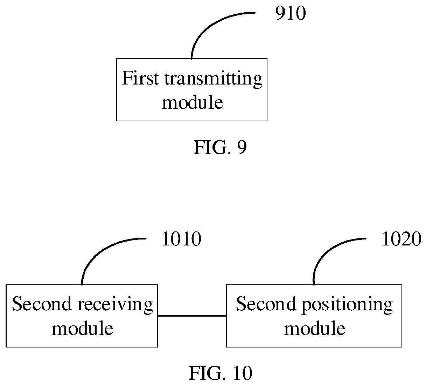

FIG. 9 is a schematic structural diagram of an apparatus for transmitting timing error association information applied to a terminal device according to an embodiment of the present application. As shown in FIG. 9, the apparatus includes:
a first transmitting module 910, for transmitting association information between a sounding reference signal for positioning (SRS-Pos) resource or SRS-Pos resource set and transmission timing error information to a network side device.

In an embodiment, the first transmitting module 910 in the apparatus transmits the association information between the SRS-Pos resource or SRS-Pos resource set and the transmission timing error information to the network side device.

The apparatus for transmitting timing error association information according to an embodiment of the present application reports the association information between the SRS-Pos resource or SRS-Pos resource set and the transmission timing error information to the network side device, the network side device may calculate the terminal position based on the association information, select different transmission timing errors according to different SRSs-Pos, the transmission timing error is more accurately estimated, or the impact of the transmission timing error may be eliminated, to avoid the impact of transmission timing error on the accuracy of terminal position calculation, thereby improving the positioning accuracy of the network side device in estimating the position of the terminal device.

It should be noted that the apparatus according to an embodiment of the present application may achieve all the method steps implemented in the above method embodiments and achieve the same technical effects. The same parts and beneficial effects as in the method embodiments in this embodiment will not be elaborated in detail.

FIG. 10 is a schematic structural diagram of an apparatus for transmitting timing error association information applied to a network side device according to an embodiment of the present application. As shown in FIG. 10, the apparatus includes:
a second receiving module 1010, used for receiving association information between a sounding reference signal for positioning (SRS-Pos) resource or SRS-Pos resource set and transmission timing error information transmitted from a terminal device; and
a second positioning module 1020, used for positioning the terminal device based on the association information.

In an embodiment, the second receiving module 1010 in the apparatus receives the association information transmitted from the terminal device, and the association information is the association information between the SRS-Pos resource or resource set and the transmission timing error.

The second positioning module 1020 in the apparatus determines association relationships between different SRS-Pos resources or resource sets and the transmission timing error information based on the received association information;

TRP completes the measurement of positioning time based on the SRS-Pos resource, the apparatus obtains the transmission timing error information corresponding to the same SRS-Pos resource used by TRP based on the association relationship between the SRS-Pos resource or SRS-Pos resource set and the transmission timing error information to correct the measurement results of positioning time of the TRP, and the terminal device is accurately positioned.

For the apparatus for transmitting timing error association information according to an embodiment of the present application, the terminal device reports the association information between the SRS-Pos resource or SRS-Pos resource set and the transmission timing error information to the apparatus, the apparatus may calculate the terminal position based on the association information, select different transmission timing errors according to different SRSs-Pos, the transmission timing error is more accurately estimated, or the impact of the transmission timing error may be eliminated, to avoid the impact of transmission timing error on the accuracy of terminal position calculation, and the positioning accuracy of the apparatus in estimating the position of the terminal device is improved.

It should be noted that the apparatus according to an embodiment of the present application may achieve all the method steps implemented in the above method embodiments and achieve the same technical effects. Therefore, the same parts and beneficial effects as in the method embodiments in this embodiment will not be elaborated in detail.

It should be noted that, the division of units in the embodiments of the present application is schematic, and is only a logical function division, and other division manners may be performed in actual implementation. In addition, the functional units in the various embodiments of the present application can be integrated into one processing unit/module, or each unit/module can exist alone physically, or two or more units/modules can be integrated into one unit/module. The integrated unit/module can be implemented in the form of hardware or software functional unit.

In case that the integrated unit/module is implemented in the form of a software functional unit/module and sold or used as an independent product, it can be stored in a processor readable storage medium. Based on such understanding, the solutions of the present application in essence or a part of the solutions that contributes to the related art, or all or part of the solutions, can be embodied in the form of a software product, which is stored in a storage medium, including several instructions to cause a computer device (which can be a personal computer, server, or network side device, etc.) or a processor to perform all or part of the steps of the methods described in the respective embodiments of the present application. The storage medium described above includes various media that can store program codes, such as USB flash disk, mobile hard disk, read-only memory (ROM), random access memory (RAM), magnetic disk, or optical disk.

It should be noted that the above-mentioned apparatus according to an embodiment of the present application may achieve all the method steps implemented in the above method embodiments, and may achieve the same technical effect. The same parts and beneficial effects as in the method embodiments in this embodiment will not be elaborated in detail.

The present application also provides a computer program product including a computer program stored on a non-transient computer-readable storage medium. The computer program includes a program instruction that, when executed by the computer, causes the computer to perform the method for transmitting timing error association information provided by the above methods, for example, including:
transmitting association information between a sounding reference signal for positioning (SRS-Pos) resource or SRS-Pos resource set and transmission timing error information to a network side device.

The present application also provides a computer program product including a computer program stored on a non-transient computer-readable storage medium. The computer program includes a program instruction that, when executed by the computer, causes the computer to perform the method for transmitting timing error association information provided in the above methods, for example, including:
receiving association information between a sounding reference signal for positioning (SRS-Pos) resource or SRS-Pos resource set and transmission timing error information transmitted from a terminal device;
positioning the terminal device based on the association information.

The embodiments of the present applications further provide a processor readable storage medium storing a computer program for causing the processor to execute the method for transmitting timing error association information provided in the embodiments, for example, including:
transmitting association information between a sounding reference signal for positioning (SRS-Pos) resource or SRS-Pos resource set and transmission timing error information to a network side device.

The embodiments of the present applications further provide a processor readable storage medium storing a computer program for causing the processor to execute the method for transmitting timing error association information provided in the embodiments, for example, including:
receiving association information between a sounding reference signal for positioning (SRS-Pos) resource or SRS-Pos resource set and transmission timing error information transmitted from a terminal device;
positioning the terminal device based on the association information.

The processor readable storage medium can be any available medium or data storage device that can be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to the embodiments of the present application can be applicable to various systems, especially to 5G systems For example, the applicable systems can be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network side device, and can further include a core network part, such as an evolved packet system (EPS), a 5G system (5GS), and the like.

The network side device in the embodiments of the present application can be a base station, and the base station can include multiple cells providing services for the terminal. Depending on the specific scenario, the base station may be called an access point, or a device communicating with a wireless terminal device through one or more sectors on the air interface in the access network, or other names. The network side device can be used for exchanging received air frames with Internet Protocol (IP) packets, and acting as a router between the wireless terminal device and the rest of the access network, where the rest of the access network can include an IP communication network. The network side device can also coordinate attribute management for the air interface. For example, the network side device in the embodiments of the present application may be a base transceiver station (BTS) in a global system for mobile communications (GSM) or a code division multiple access (CDMA), or may be a node B in a wide-band code division multiple access (WCDMA), or may be an evolutional NodeB (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network side device may include a centralized unit (CU) node and a distributed unit (DU) node, and the centralized unit and the distributed unit may be geographically separated.

The terminal device in the embodiments of the present application can be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device can communicate with one or more core networks (CNs) via a radio access network (RAN), and the wireless terminal can be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application.

A multi-input multi-output (MIMO) transmission may be performed between the network side device and the terminal by using one or more antennas. The MIMO transmission may be single-user MIMO (SU-MIMO) or multi-user MIMO (MU-MIMO). Depending on the form and number of antenna combinations, MIMO transmission can be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by processor-executable instructions. These processor-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may be stored in processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations can be made in the present application without departing from the scope of the present application. Thus, provided that these modifications and variations of the present application are within the scope of the claims of the present application and their equivalents, the present application is also intended to cover such modifications and variations

## Claims

1. A method for transmitting timing error association information, applied to a terminal device, comprising:
transmitting association information between a sounding reference signal for positioning, SRS-Pos, resource or SRS-Pos resource set and transmission timing error information to a network side device.

2. The method of claim 1, wherein transmitting the association information between the SRS-Pos resource or SRS-Pos resource set and the transmission timing error information to the network side device comprises:
transmitting the association information to a location management function, LMF; or
transmitting the association information to a base station; or
transmitting the association information to an LMF via a base station;
wherein the network side device comprises the LMF or the base station.

3. The method of claim 1 or 2, wherein the association information is determined by any of the following ways:
determining association information between an SRS-Pos resource identifier, ID, or SRS-Pos resource set ID and a transmission timing error information ID based on the SRS-Pos resource ID or SRS-Pos resource set ID; or
determining association information between a transmission timing error information ID and an SRS-Pos resource ID or SRS-Pos resource set ID based on the transmission timing error information ID; or
determining the association information based on whether SRS-Pos resources in the SRS-Pos resource set belong to a same transmission timing error information ID; or
determining the association information based on whether the SRS-Pos resource sets belong to a same transmission timing error information ID.

4. The method of claim 1 or 2, further comprising:
transmitting multiple SRSs-Pos using a same radio frequency link during one positioning measurement; or
reporting a mapping relationship between a transmission timing error information ID and a range of transmission timing error to the network side device; or
reporting timestamp information corresponding to the association information for indicating a validity period of the association information to the network side device; or
reporting configuration information of a sounding reference signal for MIMO, SRS-MIMO, and/or association information between SRS-MIMO and the transmission timing error information to the network side device; or
after receiving a capability request transmitted from the network side device, transmitting a response message to the network side device to indicate whether the terminal device is able to provide the association information, and in case that the terminal device is able to provide the association information, carrying the association information in the response message.

5. The method of claim 1 or 2, further comprising:
after receiving an association information request message transmitted from the network side device, determining a reporting content and/or a reporting path of the association information based on an indication of the association information request message:
wherein the reporting path comprises directly or indirectly reporting the association information; and
the reporting content comprises a granularity, an additional content, and a format of the association information.

6. The method of claim 1 or 2, wherein transmitting the association information to the network side device comprises:
transmitting *ProvideLocationlnformation* to the network side device and carrying the association information in a *ProvideLocationlnformation* information element, IE.

7. The method of claim 1 or 2, wherein,
in case that the association information is configured to the SRS-Pos resource set, it indicates that all SRS-Pos resources in the resource set have same transmission timing error information; and
in case that the association information is configured to the SRS-Pos resource, it indicates that different SRSs-Pos resources in the resource set have different transmission timing error information.

8. A method for transmitting timing error association information, applied to a network side device, comprising:
receiving association information between a sounding reference signal for positioning, SRS-Pos, resource or SRS-Pos resource set and transmission timing error information transmitted from a terminal device; and
positioning the terminal device based on the association information.

9. The method of claim 8, further comprising:
receiving a mapping relationship between a transmission timing error information ID and a range of transmission timing error transmitted from the terminal device; or
receiving timestamp information corresponding to the association information for indicating a validity period of the association information transmitted from the terminal device; or
receiving configuration information of a sounding reference signal for MIMO, SRS-MIMO, and/or association information between SRS-MIMO and the transmission timing error information reported from the terminal device; or
after transmitting a capability request to the terminal device, receiving a response message transmitted from the terminal device, wherein the capability request is used to query whether the terminal device is able to provide the association information.

10. The method of claim 8, further comprising:
transmitting an association information request message to the terminal device, wherein the association information request message is used to indicate the terminal device to determine a reporting content and/or a reporting path of the association information,
wherein the reporting path comprises directly or indirectly reporting the association information; and
the reporting content comprises a granularity, an additional content, and a format of the association information.

11. The method of claim 8, wherein receiving the association information transmitted from the terminal device comprises:
receiving *ProvideLocationInfonnation* transmitted from the terminal device, wherein the association information is carried in a *ProvideLocationInfonnation* information element, IE.

12. A terminal device, comprising a memory, a transceiver, and a processor;
the memory is used for storing a computer program; the transceiver is used for transmitting and receiving data under control of the processor; the processor is used for executing the computer program in the memory and performing the following steps:
transmitting association information between a sounding reference signal for positioning, SRS-Pos, resource or SRS-Pos resource set and transmission timing error information to a network side device.

13. The terminal device of claim 12, wherein transmitting the association information between the SRS-Pos resource or SRS-Pos resource set and the transmission timing error information to the network side device comprises:
transmitting the association information to a location management function, LMF; or
transmitting the association information to a base station; or
transmitting the association information to an LMF via a base station;
wherein the network side device comprises the LMF or the base station.

14. The terminal device of claim 12 or 13, wherein the association information is determined by any of the following ways:
determining association information between an SRS-Pos resource identifier, ID, or SRS-Pos resource set ID and a transmission timing error information ID based on the SRS-Pos resource ID or SRS-Pos resource set ID; or
determining association information between a transmission timing error information ID and an SRS-Pos resource ID or SRS-Pos resource set ID based on the transmission timing error information ID; or
determining the association information based on whether SRS-Pos resources in the SRS-Pos resource set belong to a same transmission timing error information ID; or
determining the association information based on whether the SRS-Pos resource sets belong to a same transmission timing error information ID.

15. The terminal device of claim 12 or 13, wherein the processor is further used for executing the computer program in the memory and performing the following steps:
transmitting multiple SRSs-Pos using a same radio frequency link during one positioning measurement; or
reporting a mapping relationship between a transmission timing error information ID and a range of transmission timing error to the network side device; or
reporting timestamp information corresponding to the association information for indicating a validity period of the association information to the network side device; or
reporting configuration information of a sounding reference signal for MIMO, SRS-MIMO, and/or association information between SRS-MIMO and the transmission timing error information to the network side device; or
after receiving a capability request transmitted from the network side device, transmitting a response message to the network side device to indicate whether the terminal device is able to provide the association information, and in case that the terminal device is able to provide the association information, carrying the association information in the response message.

16. The terminal device of claim 12 or 13, wherein the processor is further used for executing the computer program in the memory and performing the following steps:
after receiving an association information request message transmitted from the network side device, determining a reporting content and/or a reporting path of the association information based on an indication of the association information request message:
wherein the reporting path comprises directly or indirectly reporting the association information; and
the reporting content comprises a granularity, an additional content, and a format of the association information.

17. The terminal device of claim 12 or 13, wherein transmitting the association information to the network side device comprises:
transmitting *ProvideLocationlnformation* to the network side device and carrying the association information in a *ProvideLocationlnformation* information element, IE.

18. The terminal device of claim 12 or 13, wherein,
in case that the association information is configured to the SRS-Pos resource set, it indicates that all SRS-Pos resources in the resource set have same transmission timing error information; and
in case that the association information is configured to the SRS-Pos resource, it indicates that different SRSs-Pos resources in the resource set have different transmission timing error information.

19. A network side device, comprising a memory, a transceiver, and a processor;
the memory is used for storing a computer program; the transceiver is used for transmitting and receiving data under control of the processor; the processor is used for executing the computer program in the memory and performing the following steps:
receiving association information between a sounding reference signal for positioning, SRS-Pos, resource or SRS-Pos resource set and transmission timing error information transmitted from a terminal device; and
positioning the terminal device based on the association information.

20. The network side device of claim 19, wherein the processor is further used for executing the computer program in the memory and performing the following steps:
receiving a mapping relationship between a transmission timing error information ID and a range of transmission timing error transmitted from the terminal device; or
receiving timestamp information corresponding to the association information for indicating a validity period of the association information transmitted from the terminal device; or
receiving configuration information of a sounding reference signal for MIMO, SRS-MIMO, and/or association information between SRS-MIMO and the transmission timing error information reported from the terminal device; or
after transmitting a capability request to the terminal device, receiving a response message transmitted from the terminal device, wherein the capability request is used to query whether the terminal device is able to provide the association information.

21. The network side device of claim 19, wherein the processor is further used for executing the computer program in the memory and performing the following steps:
transmitting an association information request message to the terminal device, wherein the association information request message is used to indicate the terminal device to determine a reporting content and/or a reporting path of the association information,
wherein the reporting path comprises directly or indirectly reporting the association information; and
the reporting content comprises a granularity, an additional content, and a format of the association information.

22. The network side device of claim 19, wherein receiving the association information transmitted from the terminal device comprises:
receiving *ProvideLocationInfonnation* transmitted from the terminal device, wherein the association information is carried in a *ProvideLocationInfonnation* information element, IE.

23. An apparatus for transmitting timing error association information, applied to a terminal device, comprising:
a first transmitting module, used for transmitting association information between a sounding reference signal for positioning, SRS-Pos, resource or SRS-Pos resource set and transmission timing error information to a network side device.

24. The apparatus of claim 23, wherein transmitting the association information between the SRS-Pos resource or SRS-Pos resource set and the transmission timing error information to the network side device comprises:
transmitting the association information to a location management function, LMF; or
transmitting the association information to a base station; or
transmitting the association information to an LMF via a base station;
wherein the network side device comprises the LMF or the base station.

25. The apparatus of claim 23 or 24, wherein the association information is determined by any of the following ways:
determining association information between an SRS-Pos resource identifier, ID, or SRS-Pos resource set ID and a transmission timing error information ID based on the SRS-Pos resource ID or SRS-Pos resource set ID; or
determining association information between a transmission timing error information ID and an SRS-Pos resource ID or SRS-Pos resource set ID based on the transmission timing error information ID; or
determining the association information based on whether SRS-Pos resources in the SRS-Pos resource set belong to a same transmission timing error information ID; or
determining the association information based on whether the SRS-Pos resource sets belong to a same transmission timing error information ID.

26. The apparatus of claim 23 or 24, wherein the first transmitting module is further used for:
transmitting multiple SRSs-Pos using a same radio frequency link during one positioning measurement; or
reporting a mapping relationship between a transmission timing error information ID and a range of transmission timing error to the network side device; or
reporting timestamp information corresponding to the association information for indicating a validity period of the association information to the network side device; or
reporting configuration information of a sounding reference signal for MIMO, SRS-MIMO, and/or association information between SRS-MIMO and the transmission timing error information to the network side device; or
after receiving a capability request transmitted from the network side device, transmitting a response message to the network side device to indicate whether the terminal device is able to provide the association information, and in case that the terminal device is able to provide the association information, carrying the association information in the response message.

27. The apparatus of claim 23 or 24, further comprising a receiving module for:
after receiving an association information request message transmitted from the network side device, determining a reporting content and/or a reporting path of the association information based on an indication of the association information request message,
wherein the reporting path comprises directly or indirectly reporting the association information; and
the reporting content comprises a granularity, an additional content, and a format of the association information.

28. The apparatus of claim 23 or 24, wherein when transmitting the association information to the network side device, the first transmitting module is further used for:
transmitting *ProvideLocationlnformation* to the network side device and carrying the association information in a *ProvideLocationlnformation* information element, IE.

29. The apparatus of claim 23 or 24, wherein:
in case that the association information is configured to the SRS-Pos resource set, it indicates that all SRS-Pos resources in the resource set have same transmission timing error information; and
in case that the association information is configured to the SRS-Pos resource, it indicates that different SRSs-Pos resources in the resource set have different transmission timing error information.

30. An apparatus for transmitting timing error association information, applied to a network side device, comprising:
a second receiving module, used for receiving association information between a sounding reference signal for positioning, SRS-Pos, resource or SRS-Pos resource set and transmission timing error information transmitted from a terminal device; and
a second positioning module, used for positioning the terminal device based on the association information.

31. The apparatus of claim 30, wherein the second receiving module is further used for:
receiving a mapping relationship between a transmission timing error information ID and a range of transmission timing error transmitted from the terminal device; or
receiving timestamp information corresponding to the association information for indicating a validity period of the association information transmitted from the terminal device; or
receiving configuration information of a sounding reference signal for MIMO, SRS-MIMO, and/or association information between SRS-MIMO and the transmission timing error information reported from the terminal device; or
after transmitting a capability request to the terminal device, receiving a response message transmitted from the terminal device, wherein the capability request is used to query whether the terminal device is able to provide the association information.

32. The apparatus of claim 30, further comprising a second transmitting module for:
transmitting an association information request message to the terminal device, wherein the association information request message is used to indicate the terminal device to determine a reporting content and/or a reporting path of the association information,
wherein the reporting path comprises directly or indirectly reporting the association information; and
the reporting content comprises a granularity, an additional content, and a format of the association information.

33. The apparatus of claim 30, wherein the second receiving module is used for:
receiving *ProvideLocationInfonnation* transmitted from the terminal device, wherein the association information is carried in a *ProvideLocationInfonnation* information element, IE.

34. A processor readable storage medium, wherein the processor readable storage medium stores a computer program that, when executed by a processor, causes the processor to perform the method for transmitting timing error association information of any one of claims 1 to 7.

35. A processor readable storage medium, wherein the processor readable storage medium stores a computer program that, when executed by a processor, causes the processor to perform the method for transmitting timing error association information of any one of claims 8 to 11.
